# FASCICULE DE BREVET EUROPEEN

(11) **EP 1 089 157 B1**
(45) Date de publication et mention de la délivrance du brevet: **08.11.2006**
(21) Numéro de dépôt: 99119213.9
(22) Date de dépôt: 28.09.1999
(51) Int. Cl.: G06F 21/00

(54) **Procédé d'autorisation d'accès à des applications informatiques**
Verfahren zur Zugangsberechtigung zu Rechneranwendungen
Method for authorising access to computer applications

(43) Date de publication de la demande: 04.04.2001
(73) Titulaire: SWATCH AG, CH-2500 Biel (CH)
(72) Inventeur: Meier, Thomas, 2502 Biel (CH)
(74) Mandataire: Laurent, Jean

(56) Documents cités:
- DE-A- 19 706 494
- FR-A- 2 760 158

## Description

L'invention concerne un procédé d'autorisation d'accès à des applications informatiques à l'aide d'une installation informatique qui comprend une station d'ordinateur connectée à un réseau de communication entre ordinateurs, une unité de lecture en communication avec la station, au moins un objet portatif pourvu d'un circuit électronique personnalisé ayant des premiers moyens d'émission et de réception de signaux, ledit circuit électronique ayant une mémoire comprenant au moins un mot lisible de vérification, l'unité de lecture ayant des seconds moyens d'émission et de réception de signaux pour communiquer avec l'objet portatif lorsque celui-ci se trouve dans une zone déterminée.

L'invention concerne également une unité de lecture pour le transfert de données et/ou de commande avec la station d'ordinateur et un dispositif d'autorisation d'accès notamment pour la mise en oeuvre du procédé.

Comme il est d'usage actuellement, la plupart des stations de travail sont connectées également sur des réseaux de communication entre ordinateurs que ce soit localement ou mondialement pour pouvoir utiliser diverses applications offertes sur des serveurs ou simplement le transfert d'informations d'une station à une autre.

L'utilisation d'un ordinateur ou d'une station de travail dans tout secteur d'activités est devenue une nécessité pour accomplir divers travaux quotidiens tels que par exemple la rédaction de textes ou l'établissement de tableaux de données à sa place de travail ou même en relation avec des comptes bancaires.

Depuis l'évolution des moyens de communication de ces dernières années, les ordinateurs peuvent également être branchés sur des réseaux de communication pour la transmission ou la recherche de données ou de messages entre ordinateurs situés en tout point du globe. Cet ensemble de réseaux de communication a conduit à la conception d'un réseau des réseaux dénommé Internet afin de permettre à toute personne travaillant sur sa station de travail de chercher de multiples informations dans divers serveurs du réseau mondial. Il peut obtenir des informations visuelles, sonores ou simplement textuelles.

Certains services offerts dans l'ordinateur peuvent être protégés à l'aide de codes ou de mots de passe à introduire, n'autorisant l'accès qu'aux personnes autorisées dans le cas où lesdits services questionnés contiennent des données personnelles ou confidentielles. Ces précautions d'usage ont conduit à la réalisation de divers dispositifs de sécurité en liaison avec l'accès à l'ordinateur.

Des mots de passe à entrer à l'aide du clavier d'ordinateur ont été les premiers moyens utilisés pour interdire à toute personne non-autorisée l'accès à des applications personnelles ou confidentielles d'un ordinateur. Mais, cela exige de l'utilisateur de l'ordinateur de connaître à tout moment son mot de passe, sans quoi il lui sera difficile d'y accéder sans faire appel à un informaticien.

Certaines facilités d'accès aux ordinateurs à des personnes autorisées ont consisté par exemple à les munir d'une carte ou même d'une montre personnalisée comprenant des moyens d'émission et de réception pouvant dialoguer à l'aide d'ondes électromagnétiques avec un lecteur intégré à la structure de l'ordinateur. Dès que la carte ou la montre est suffisamment proche du lecteur, la connexion à l'ordinateur est automatique sans nul autre besoin d'introduire un mot de passe, afin de simplifier l'entrée aux applications de l'ordinateur.

Dans le cas d'une montre-bracelet, il a même été envisagé par mesure de sécurité d'enregistrer des données dans une mémoire de la montre une fois que l'utilisateur la porte, et de les effacer automatiquement au moment où il retire la montre de son poignet. Le retrait de la montre du poignet permet d'éviter lors d'une perte ou d'un vol de la montre qu'elle soit utilisée par une personne non autorisée pour l'accès à des applications personnelles de l'ordinateur. A chaque fois que la montre doit être utilisée pour donner accès à l'ordinateur, une procédure d'enregistrement de codes d'accès dans la mémoire de la montre doit être opéré.

Le brevet EP 496344 décrit un système permettant à un porteur d'une montre-bracelet à code d'accès individuel de pouvoir se connecter automatiquement à l'ordinateur de sa place de travail en approchant sa montre d'une antenne d'un lecteur de l'ordinateur. La montre comprend notamment une antenne et des moyens d'émission et de réception de signaux pour communiquer avec le lecteur. Une source d'alimentation pour les composants électroniques peut être prévue dans la montre. Les composants électroniques du lecteur sont intégrés dans la structure de l'ordinateur, alors que l'antenne externe du lecteur est reliée à l'ordinateur par un câble électrique. L'antenne se présente sous forme d'une bobine plate logée dans un tapis pour le clavier.

Dès que le porteur de la montre s'éloigne du clavier de l'ordinateur enclenché, cela bloque les commandes du clavier et empêche quiconque de pouvoir travailler avec les applications personnelles du porteur de la montre selon la configuration prévue dudit ordinateur par mesure de sécurité. De plus, il est également prévu d'introduire un code d'identification, par exemple au moyen du clavier d'ordinateur, au début de la session de travail afin d'éviter en cas de perte ou de vol de la montre que quiconque puisse l'utiliser.

Dans le document cité, il est à noter que la structure de base de l'ordinateur doit être modifiée de façon à pouvoir y loger certains composants électroniques du lecteur, ce qui est un inconvénient. De plus, il n'est pas suggéré de donner accès automatiquement à plusieurs applications personnelles ou confidentielles protégées par des codes d'accès sur n'importe quelle station de travail connectée à un réseau de communication entre ordinateurs. L'approche de la montre avec son code d'accès individuel ne donne l'autorisation d'accès à une station de travail que localement, c'est-à-dire à une station de travail faisant partie d'un même réseau à l'intérieur d'une même entreprise. Il est donc nécessaire de se souvenir de tous lesdits codes à introduire pour atteindre l'une ou l'autre des applications sélectionnées protégées.

Le but que se propose de résoudre l'invention est de pallier aux inconvénients cités ci-devant et de pouvoir autoriser l'accès automatique à plusieurs applications informatiques à code d'accès, par exemple des applications personnelles ou confidentielles, sans qu'il soit nécessaire de se souvenir de tous les codes de chacune des applications sélectionnées.

Ce but est atteint grâce au procédé d'autorisation d'accès à des applications informatiques comme indiqué ci-dessus, caractérisé en ce qu'il comprend les étapes consistant à :
a) placer l'objet portatif dans la zone déterminée afin que le lecteur détecte sa présence, lise le mot lisible de la mémoire du circuit et donne l'ordre à la station de se brancher automatiquement sur le réseau de communication à destination d'un fichier de contrôle d'un serveur déterminé pour l'envoi du mot lisible,
b) chercher dans le fichier de contrôle si le mot lisible est compris dans une liste de mots autorisés,
c) uniquement si le mot lisible a été trouvé dans la liste, envoyer depuis le fichier de contrôle un mot de passe, à destination des moyens de mémorisation pour ouvrir la barrière de lecture, et
d) communiquer les mots d'accès contenus dans les moyens de mémorisation à la station afin d'autoriser l'ouverture desdites applications.

Ce but est également atteint grâce à une unité de lecture périphérique destinée à être en communication avec une station d'ordinateur qui se caractérise en ce qu'elle comprend des moyens d'émission et de réception de signaux afin de pouvoir communiquer avec un objet portatif pourvu d'un circuit électronique personnalisé ayant d'autres moyens d'émission et de réception de signaux lorsque celui-ci se trouve dans une zone déterminée.

Ce but est également atteint grâce à un dispositif d'autorisation d'accès à des applications informatiques comprenant un objet portatif pourvu d'un circuit électronique personnalisé ayant des premiers moyens d'émission et de réception de signaux, et une unité de lecture périphérique ayant des seconds moyens d'émission et de réception de signaux pour communiquer avec l'objet portatif lorsque celui-ci se trouve dans une zone déterminé, l'unité de lecture étant en communication avec une station d'ordinateur.

Un avantage du procédé d'autorisation d'accès à des applications informatiques selon l'invention est qu'il permet à toute personne autorisée, même non initiée aux techniques informatiques, disposant d'un objet portatif personnalisé pourvu d'un circuit électronique ayant des moyens d'émission et de réception de signaux pour communiquer avec une unité de lecture, de se connecter facilement et simplement à des applications informatiques personnelles par le biais d'une station de travail. La station d'ordinateur est connectée à un réseau de communication entre ordinateurs que ce soit localement ou mondialement. En outre, des codes d'accès aux applications sont enregistrés dans des moyens de mémorisation à barrière de lecture et/ou d'écriture d'une installation informatique, et l'unité de lecture est en communication avec la station de travail pour la transmission mutuelle de données et/ou de commandes.

Un autre avantage est que le branchement à ses propres applications informatiques peut se faire sur n'importe quelle station de travail sans aucune configuration particulière pour autant qu'une unité de lecture soit reliée à une entrée de ladite station et que la station soit reliée au réseau de communication entre ordinateurs, de préférence à un réseau mondial. Une plus grande mobilité d'accès est ainsi offerte en utilisant ledit réseau de communication pour pouvoir chercher le mot d'identification lisible dans une liste de mots autorisés d'un fichier de contrôle appartenant à un serveur déterminé.

Il n'est ainsi pas nécessaire de se rappeler tous les mots de passe de diverses applications car tous sont stockés dans des moyens de mémorisation à barrière de lecture et/ou d'écriture qui sont, par exemple, compris dans la mémoire dudit objet portatif. La barrière de lecture est ouverte après validation du mot lisible de vérification de la mémoire de l'objet sur un fichier de contrôle prédéterminé. Cela évite donc de devoir les introduire manuellement à l'aide du clavier d'ordinateur et de commettre subséquemment des erreurs d'introduction, ou de chercher l'application souhaitée dans l'ordinateur.

De manière générale, les adresses des applications à ouvrir par mots d'accès sont en principe dans le serveur interrogé du réseau de communication, tandis que les mots d'accès correspondants sont dans la mémoire du circuit de l'objet. Il est néanmoins concevable d'avoir les adresses des applications également enregistrées dans la mémoire du circuit pour autant qu'elle puisse contenir suffisamment de mots d'accès et de mots d'adresses.

Dans le cas où la mémoire du circuit ne contient que le ou les mots lisibles de vérification à valider par le fichier de contrôle, les adresses d'applications et les mots d'accès correspondants peuvent être également dans des moyens de mémorisation appartenant au serveur prédéterminé.

L'unité de lecture peut être prévue directement sur toute station de travail de manière à constituer préférablement une unité périphérique, mais peut également être emportée et connectée à une prise standard de n'importe quelle station de travail. L'unité de lecture comprend un module de mémorisation avec l'adresse du serveur prédéterminé contenant le fichier de contrôle, ainsi que tout le logiciel nécessaire pour donner l'ordre à la station sur laquelle elle est connectée de se brancher au serveur prédéterminé vers le fichier de contrôle dudit réseau de communication. Lors de voyages, uniquement l'objet portatif, ainsi que l'unité de lecture peuvent être emportés en évitant tout encombrement d'objets indésirables ou de taille importante.

Le fait de prévoir l'unité de lecture en périphérie de la station de travail évite avantageusement de devoir modifier la structure interne de ladite station. Il suffit de se procurer l'unité de lecture avec un câble électrique adéquat afin de la connecter à une prise d'entrée du type USB (universal serial bus) de la station de travail. De cette entrée, la station fournit l'alimentation électrique à l'unité de lecture et la possibilité de transfert de données entre cette unité et la station.

L'objet portatif comprend un circuit électronique avec une mémoire dans laquelle un mot lisible de vérification ou code d'accès a été gravé après fabrication pour individualiser chaque objet portatif. Un avantage supplémentaire de l'invention est qu'en cas de perte ou de vol, l'objet portatif peut être rendu inactif en supprimant sa validité par tout moyen de communication en relation avec le serveur déterminé. Il est possible, par exemple, d'établir une communication téléphonique à un centre d'appels à voix artificielle qui est en relation avec le fichier de contrôle déterminé pour retirer de la liste le code de l'objet ainsi perdu ou dérobé.

Les caractéristiques de l'invention seront expliquées plus en détail de manière non limitative dans la description qui suit en se basant sur les dessins sur lesquels:
La figure 1 représente une forme d'exécution d'une installation informatique avec une connexion au réseau mondial de communication pour la mise en oeuvre du procédé,
la figure 2 représente un organigramme des étapes du procédé, et
la figure 3 représente un bloc diagramme de l'unité de lecture et du transpondeur de l'objet portatif.

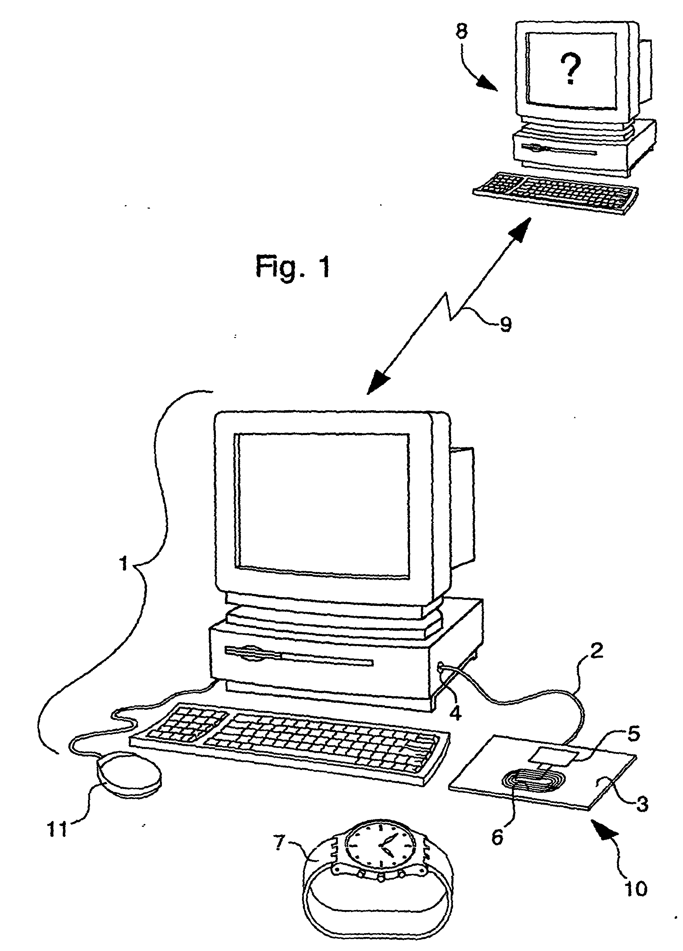

L'installation informatique ou dispositif d'autorisation d'accès, montrée en figure 1, comprend une station de travail 1 avec un clavier et un écran, un tapis de souris 3 dans lequel sont intégrés tous les composants d'une unité de lecture 10 ayant des moyens d'émission et de réception de signaux magnétiques ou électromagnétiques, notamment des signaux radiofréquences, pour communiquer avec un objet portatif à transpondeur représenté ici par une montre-bracelet 7. L'unité de lecture 10 comprend notamment une antenne 6 de forme plane et un circuit imprimé 5 avec tous les composants électroniques de commande de l'antenne de façon à pouvoir émettre ou recevoir les signaux radiofréquences dans une zone déterminée.

La station de travail 1 est reliée à un réseau de communication entre ordinateur 9 pour pouvoir se brancher à un serveur déterminé 8 grâce à une adresse contenue dans l'unité de lecture 10. Le réseau de communication est de préférence un réseau mondial.

L'unité de lecture 10 est reliée électriquement à l'aide d'un câble électrique 2 à une prise d'entrée 4 de la station de travail. Cette prise est du type standard USB (universal serial bus). Le câble 2 va servir d'une part à alimenter en électricité l'unité de lecture 10 et à permettre de transiter toutes les données et/ou les commandes de l'unité 10 vers la station de travail 1 et inversement.

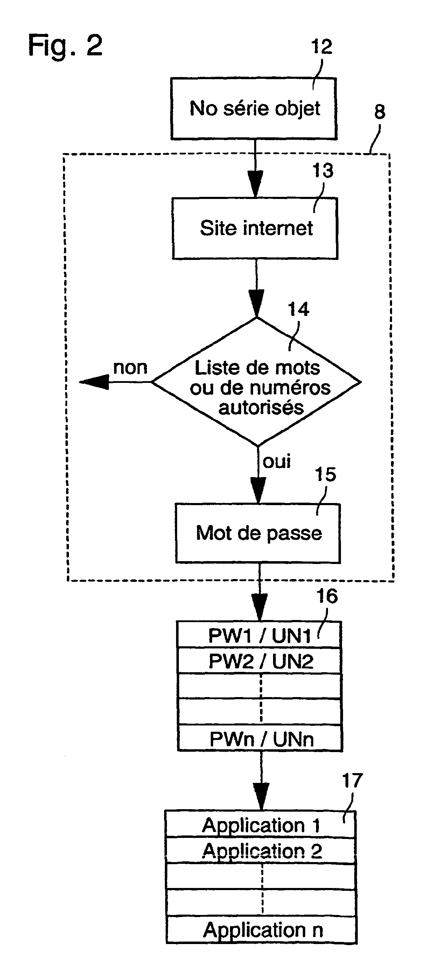

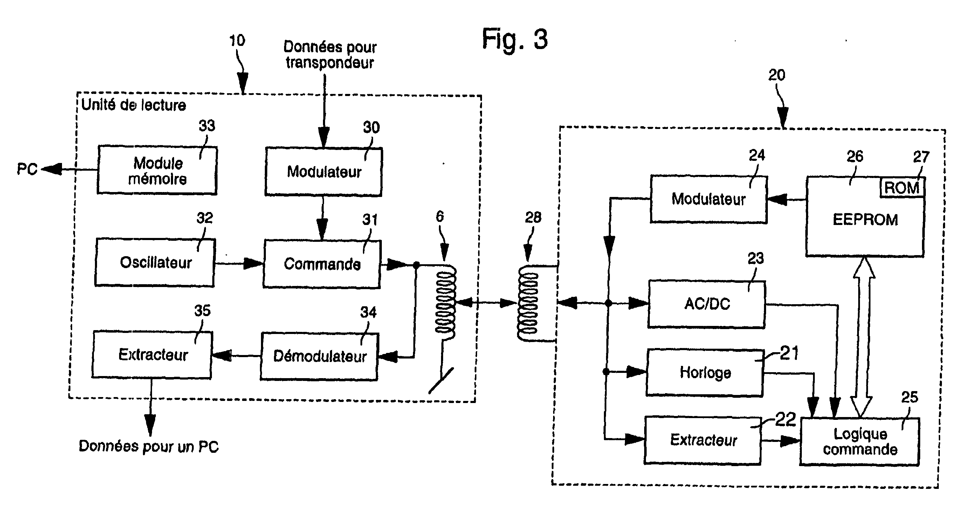

Sur le circuit imprimé 5 de l'unité de lecture 10, visibles en figure 3, sont disposés notamment un oscillateur 32 pour générer les signaux radiofréquences, un modulateur d'amplitude 30 afin de moduler les signaux en fonction des données à envoyer au transpondeur, un élément de commande 31 recevant les signaux du modulateur 30 et de l'oscillateur 32, un démodulateur 34 de signaux reçus du transpondeur 20 suivi d'un module de filtrage et d'amplification desdits signaux de données, et un décodeur de données 35 pour la transmission vers la station d'ordinateur. L'unité comprend également un module de mémorisation 33 dans laquelle une adresse du serveur déterminé 8 que l'on souhaite interroger, tel que le serveur du fabricant de la montre, est enregistrée, ainsi qu'un logiciel de lancement de l'adresse comme il sera décrit dans la suite de la description en regard à la figure 2.

La zone déterminée de détection de l'unité de lecture 10 dépend de la dimension de l'antenne 6 à disposition. L'objet portatif 7 est détecté par l'unité de lecture 10 à faible distance, par exemple entre 2 et 5 cm, de façon à obliger l'utilisateur à rester très proche de la station pour ouvrir des applications personnelles ou confidentielles ou payantes à codes d'accès. Cette précaution de proximité de détection permet d'éviter que d'autres porteurs d'objets portatifs à transpondeur dans le voisinage de l'unité de lecture perturbent l'accès du premier utilisateur.

La souris d'ordinateur 11 a été représentée sur la figure 1 avec un câble électrique de connexion à une autre prise de l'ordinateur, mais il est bien clair qu'elle pourrait lui être reliée autrement et que, pour économiser le nombre d'entrées à l'ordinateur, la souris pourrait se brancher également au tapis de souris 3 et ainsi utiliser le câble 2 pour activer les applications apparaissant sur l'écran.

La montre-bracelet 7 portée par un utilisateur de la station de travail contient un transpondeur 20 pour pouvoir communiquer des données avec l'unité de lecture 10 lorsqu'elle se trouve dans la zone déterminée de détection. Le circuit électronique du transpondeur 20 est par exemple le circuit V4050/64 fabriqué par l'entreprise EM Microelectronic-Marin S.A..

En regard de la figure 3, le transpondeur 20 est constitué d'une bobine servant d'antenne 28 reliée à un circuit électronique de gestion des signaux entrants et sortants du transpondeur. Le circuit a une partie de mémoire ROM 27 dans laquelle sont enregistrés le numéro de série 12 et le code d'identification qui sont lisibles par l'ordinateur. Ces deux mots de 32 bits de la mémoire ROM 27 ont été gravés par laser après la fabrication dudit circuit de façon à personnaliser chaque circuit sorti de production, et ne peuvent donc pas être modifiés.

Une partie de mémoire EEPROM 26 du transpondeur comprend 32 positions de mémoire dans lesquelles des mots de 32 bits sont enregistrés ou le seront lors de l'utilisation avec la station de travail 1. Ces mots sont des mots de passe et des mots de noms d'utilisateur pour l'ouverture d'applications de l'ordinateur. Ces mots sont protégés par une barrière de lecture ou d'écriture. L'accès auxdits mots n'est possible qu'en introduisant dans le transpondeur 20 un mot de passe spécifique de la barrière de lecture ou d'écriture. Ce mot de passe spécifique ne peut pas être lu, mais peut être modifié par le biais de la station de travail 1 en communication avec l'objet portatif 7.

Les adresses des applications correspondantes aux mots d'accès peuvent également être enregistrées dans la mémoire EEPROM 26 pour autant qu'il y ait suffisamment de place. Toutefois, il est plus commode de les obtenir depuis le serveur questionné.

L'alimentation électrique 23 du transpondeur 20 est tirée des signaux de fréquences comprises par exemple entre 100 et 150 kHz, de préférence de 125 kHz, émis par l'unité de lecture 10 lorsque l'objet portatif 7 se trouve dans la zone déterminée. Cela évite de devoir munir l'objet d'une source d'alimentation telle qu'une batterie qui doit régulièrement être changée. A la réception des signaux radiofréquences de l'unité de lecture 10, un convertisseur 23 du circuit redresse la tension alternative de la bobine 28 pour alimenter en tension continue certains modules électroniques du transpondeur 20, notamment la logique de commande 25 de la mémoire. Les signaux d'horloge 21 sont également tirés des signaux radiofréquences pour cadencer les opérations du transpondeur. Il est à noter que le transpondeur est un élément supplémentaire à la montre-bracelet et qu'il n'y a aucune relation entre les fonctions horaires de la montre et les signaux d'horloge du transpondeur.

Un extracteur de données 22 reçues de l'unité de lecture est dirigé vers un module de logique de commande 25 en liaison avec la mémoire. Si le mot de passe équivalent à celui de la barrière de lecture de la mémoire est entré dans le transpondeur 20, les mots des positions de mémoire sont encodés et modulés dans un modulateur 24 afin qu'ils soient tous transmis via la bobine 28 en direction de l'unité de lecture 10.

Il est à noter que la modulation d'amplitude utilisée pour l'émission des signaux radiofréquences aussi bien du transpondeur 20 que de l'unité de lecture 10 sert à définir des états logiques 1 et 0 pour décrypter les données envoyées après décodage.

En lieu et place de signaux radiofréquences, des signaux haute fréquence (433 Mhz) pourraient également être utilisés pour la transmission de données et/ou de commandes entre l'unité de lecture et l'objet portatif.

Le procédé d'autorisation d'accès aux applications est décrit schématiquement ci-dessous en prenant référence sur la figure 2.

L'objet portatif, qui, dans le cas présent, est une montre-bracelet 7 à transpondeur 20 personnalisé, est approché de l'unité de lecture 10 jusqu'à ce qu'il soit dans une zone déterminée de détection. La station de travail 1 où est connectée l'unité de lecture 10 doit être enclenchée pour pouvoir notamment alimenter l'unité de lecture 10 afin qu'elle émette des signaux de détection de l'objet 7. Dès ce moment, l'unité de lecture 10, qui émet de manière régulière des signaux radiofréquences d'interrogation, détecte la présence de la montre 7, car elle reçoit une réponse du transpondeur 20 questionné. Le transpondeur 20 envoie suite à l'interrogation un signal comprenant le mot lisible de vérification, c'est-à-dire au moins le numéro de série 12 gravé dans la partie de mémoire ROM 27 vers l'unité qui lit ledit numéro de série du circuit du transpondeur 20 et donne l'ordre à la station de travail 1 de se brancher sur le serveur déterminé 8 au fichier de contrôle 13. Le serveur 8 est par exemple le serveur du fabricant de montre. L'adresse du serveur avec le fichier de contrôle est contenue dans une mémoire de l'unité, ainsi qu'un logiciel de lancement de cette adresse.

Une fois la connexion établie par Internet au fichier de contrôle 13, dénommée site internet sur la figure 2, une recherche du numéro de série de la montre 7 est opéré dans une liste de mots ou de numéros autorisés 14 du fichier de contrôle 13. Uniquement lorsque le numéro de série fait partie de cette liste dénommée liste blanche, un mot de passe 15 est envoyé par le serveur 8 en direction de la station de départ. L'unité de lecture 10 reçoit ce mot qu'elle communique au transpondeur 20.

Un contrôle est effectué dans le circuit du transpondeur 20 pour savoir si le mot de passe reçu correspond au mot de passe de la barrière de lecture de la mémoire EEPROM 26. Dans l'affirmative, la barrière de lecture est ouverte et les mots d'accès 16, gardés secrets jusqu'alors dans la mémoire EEPROM 26, sont tous transmis à la station de travail 1 afin de permettre l'ouverture des applications correspondantes 17 et reçues notamment par le réseau Internet.

Des liens ou des icônes de chaque application apparaissent sur l'écran de la station, tandis que les mots d'accès, c'est-à-dire les mots de passe et les mots de noms d'utilisateur, pour l'ouverture desdites applications obtenus de la mémoire EEPROM 26 sont invisibles à l'écran, mais sont liées intimement à chacune des applications sélectionnées à code d'accès. Les adresses desdites applications sont fournies notamment par le serveur 8. Lorsqu'avec la souris d'ordinateur 11, on vient activer une icône ou un lien de l'application que l'on souhaite ouvrir, les mots de passe et du nom de l'utilisateur sont automatiquement lancés pour l'ouverture de l'application.

Il y a correspondance entre les applications, dont l'adresse est fournie par le serveur 8, et l'ordre d'enregistrement des mots d'accès de la mémoire du transpondeur 20 de la montre 7.

Au cas où la mémoire du transpondeur 20 est suffisante, les adresses des applications sélectionnées peuvent également être enregistrées dans ladite mémoire au lieu de les avoir depuis le serveur 8.

L'intérêt d'utiliser des codes d'accès pour des applications informatiques se justifie dans les cas où il s'agit, par exemple, d'envoyer des messages de nature personnelle ou confidentielle par la messagerie électronique, ou d'interroger un compte bancaire à distance. Des codes d'accès peuvent être également mémorisés pour donner accès à des programmes de jeux ou à un prestataire de services de communication tel que Netscape®, ou à d'autres des applications, telles que des bases de données.

L'utilisateur n'a donc plus besoin de se rappeler tous les codes d'accès des applications qu'il souhaite ouvrir, car la montre 7 avec son transpondeur 20 constitue un aide-mémoire avec tous les codes d'accès mémorisés. Si par contre pour une raison ou une autre, ledit utilisateur désire changer le mot de passe, ainsi que parfois même le nom d'utilisateur pour l'ouverture de telle ou telle application, il peut à l'aide de la station de travail 1 opérer tous ces changements qui sont ensuite transférés en direction du transpondeur 20 afin que la partie concernée de mémoire EEPROM 26 puisse les enregistrer en remplacement des précédents. La barrière d'écriture doit donc être ouverte à l'aide d'un mot de passe spécifique, provenant de la station 1 et de l'unité de lecture 10, dans le transpondeur 20 pour la modification desdits codes d'accès.

Il est à noter que ce changement de codes d'accès ne peut se faire qu'après avoir passé toutes les étapes d'autorisation d'accès.

Pendant la procédure de validation de l'objet portatif 7 et avant l'ouverture de la barrière de lecture, il se peut que la montre 7 soit éloignée de l'unité de lecture 10. Le mot de passe 15 envoyé par le serveur 8 reste en attente dans la station d'ordinateur 1 de départ ou dans l'unité de lecture 10, jusqu'à ce que la montre 7 soit à nouveau approchée de l'unité de lecture 10. Le mot de passe 15 est alors transmis à la montre 7 pour ouvrir la barrière de lecture et pour donner à la station 1 tous les mots d'accès indispensables à l'ouverture de chaque application.

En cas de perte ou de vol de la montre 7, le numéro de série du circuit peut être invalidé par tout moyen de communication qui est en relation avec le fichier de contrôle 13 et sa banque de données. En communiquant le numéro de série, ainsi qu'un numéro de vérification que seul le véritable possesseur de la montre 7 perdue ou volée connaît, le numéro de série de cette montre 7 est placé sur une liste noire de mots ou de numéros non-autorisés. Si lors de la procédure de validation, le numéro de série de cette montre 7 est envoyé au serveur déterminé 8 dans le fichier de contrôle 13, le numéro ne sera pas reconnu comme numéro valable dans liste 14 et de ce fait aucun mot de passe 15 ne sera envoyé en direction de la montre 7 via la station d'ordinateur 1.

Une manière d'invalider la montre 7 perdue ou volée peut consister à appeler une centrale d'appels où une voix artificielle demande d'indiquer tout d'abord le numéro de série de la montre et ensuite le numéro de vérification de ladite montre. Une fois que ces numéros ont été introduits, un ordre est donné pour placer le numéro de série sur une liste noire de numéros non-autorisés, afin d'interdire à toute personne sans autorisation d'utiliser des applications du possesseur de la montre 7.

Dans le procédé d'autorisation d'accès décrit ci-devant, uniquement le numéro de série a été pris en compte pour la validation de la montre 7, mais il aurait également été concevable que plusieurs mots lisibles de la mémoire du transpondeur 20 soient envoyés au serveur 8. Un calcul, à l'aide d'un algorithme adéquat et des mots transmis dans le fichier de contrôle 13, est tout d'abord opéré pour trouver deux mots spécifiques de vérification qui seront enregistrés en retour dans le transpondeur 20 de la montre 7 pour occuper deux positions de mémoire lisibles. Après le calcul, si un desdits mots est trouvé dans la liste de mots autorisés 14, le mot de passe 15 est transmis à la montre 7.

La description qui vient d'être faite n'a aucun caractère limitatif. Toute forme d'exécution de l'installation informatique peut être conçue pour la mise en oeuvre du procédé d'autorisation d'accès à des applications informatiques avec une station de travail 1 reliée à un réseau de communication 9 entre ordinateurs que ce soit localement, par exemple dans un réseau Lan ou Intranet, ou mondialement, par exemple avec Internet.

L'unité de lecture 10 peut être intégrée complètement ou partiellement dans un autre élément qu'un tapis de souris 3, par exemple dans un clavier d'ordinateur. Une partie de l'unité de lecture peut également être enfermée dans une boîte reliée par un câble électrique 2 ou par une fibre optique à une prise 4 correspondante de la station de travail, quant à l'antenne 6 de l'unité de lecture 10 ou tout autre moyen pour communiquer avec l'objet portatif 7 sont prévus en dehors de la boîte.

L'objet portatif 7, quant à lui, peut prendre la forme d'une bague, d'un bracelet, d'un badge, d'une carte de crédit ou d'un collier pour autant qu'il puisse contenir le circuit électronique avec des moyens d'émission et de réception de signaux pour communiquer avec l'unité de lecture.

Les moyens d'émission et de réception sont conçus en fonction des types de signaux de communication entre l'objet portatif 7 et l'unité de lecture 10. Les signaux peuvent être également des signaux optiques ou des signaux acoustiques au lieu des signaux magnétiques ou électromagnétiques.

## Revendications

1. Procédé d'autorisation d'accès à des applications informatiques à l'aide d'une installation informatique qui comprend une station d'ordinateur (1) connectée à un réseau de communication (9) entre ordinateurs, une unité de lecture (10) périphérique reliée à la station d'ordinateur (1) pour son alimentation électrique et pour le transfert mutuel de données et/ou de commandes, au moins un objet portatif (7) pourvu d'un circuit électronique personnalisé ayant des premiers moyens d'émission et de réception de signaux (28) et une mémoire (27) qui comprend au moins un mot lisible de vérification, l'unité de lecture (10) ayant des seconds moyens d'émission et de réception de signaux (6) pour communiquer avec l'objet portatif (7) lorsque celui-ci se trouve dans une zone déterminée, **caractérisé en ce que** le procédé comprend les étapes consistant à :
a) placer l'objet portatif (7) dans la zone déterminée afin que l'unité de lecture (10) périphérique, qui comprend une antenne (6) des seconds moyens d'émission et de réception et un circuit imprimé (5) avec tous les composants électroniques de commande de l'antenne, détecte sa présence et lise le mot lisible (12) de la mémoire du circuit,
b) donner l'ordre depuis l'unité de lecture, qui comprend un module mémoire (33) avec l'adresse d'un serveur déterminé et un logiciel de lancement de l'adresse, à la station (1) pour se brancher automatiquement sur le réseau de communication (9) à destination d'un fichier de contrôle (13) du serveur déterminé (8) pour l'envoi du mot lisible (12),
c) chercher dans le fichier de contrôle (13) si le mot lisible est compris dans une liste de mots autorisés (14),
d) uniquement si le mot lisible (12) a été trouvé dans la liste (14), envoyer depuis le fichier de contrôle (13) un mot de passe (15) à destination d'un module de logique de commande (25) du circuit électronique de l'objet portatif, qui met en forme le mot de passe pour ouvrir une barrière de lecture et/ou d'écriture de moyens de mémorisation (26), qui sont contenus dans la mémoire du circuit électronique de l'objet portatif et qui comprennent des mots d'accès aux applications informatiques tenus secrets par la barrière de lecture et/ou d'écriture, et
e) communiquer les mots d'accès contenus dans les moyens de mémorisation à la station (1) afin d'autoriser l'ouverture desdites applications.

2. Procédé selon la revendication 1, **caractérisé en ce que** les adresses des applications informatiques à ouvrir à l'aide des mots d'accès sont contenues dans les moyens de mémorisation (26).

3. Procédé selon la revendication 1, **caractérisé en ce que** les adresses des applications informatiques à ouvrir à l'aide des mots d'accès sont fournies à la station d'ordinateur (1) par le serveur (8) sur le réseau de communication (9).

4. Procédé selon la revendication 1, **caractérisé en ce que** la liaison entre la station d'ordinateur (1) et l'unité de lecture (10) est assurée par un câble électrique (2) ou une fibre optique, solidaire de l'unité de lecture (10) et apte à être connecté à une prise d'entrée (4) correspondante de la station (1) pour l'alimentation électrique de l'unité de lecture (10) et le transfert de données et/ou de commandes entre l'unité (10) et la station (1).

5. Procédé selon l'une des revendications précédentes, **caractérisé en ce que** les signaux de communication entre l'unité de lecture (10) et l'objet portatif (7) sont des signaux magnétiques ou électromagnétiques ou optiques ou acoustiques.

6. Procédé selon la revendication 5, **caractérisé en ce que** le circuit électronique avec les premiers moyens d'émission et de réception est un transpondeur (20) ayant une bobine (28) pour recevoir et émettre des signaux radiofréquences pour communiquer avec l'unité de lecture (10).

7. Procédé selon la revendication 6, **caractérisé en ce que** l'alimentation électrique du transpondeur (20) est fournie à l'aide des signaux radiofréquences reçus de l'unité de lecture (10).

8. Procédé selon la revendication 6, **caractérisé en ce que** les signaux radiofréquences sont modulés en amplitude pour la transmission de données et/ou de commandes.

9. Procédé selon la revendication 1, **caractérisé en ce que** l'objet portatif (7) est une montre ou un bracelet ou un collier ou une bague ou une carte ou un badge.

10. Procédé selon l'une des revendications 1, 3 et 4, **caractérisé en ce que** l'unité de lecture (10) est intégrée entièrement dans un tapis de souris (3) ou dans un clavier de la station d'ordinateur (1).

11. Procédé selon la revendication 4, **caractérisé en ce qu'**au moins une partie de l'unité de lecture (10) est intégrée dans une boîte périphérique à la station de travail (1), le câble électrique (2) ou la fibre optique étant solidaires de ladite boîte.

12. Procédé selon la revendication 11, **caractérisé en ce qu'**une antenne (6) des seconds moyens d'émission et de réception de l'unité de lecture (10) est intégrée dans un tapis de souris (3) ou dans un clavier de la station d'ordinateur (1) reliée à la boîte périphérique.

13. Procédé selon la revendication 1, **caractérisé en ce que** la mémoire (27) du circuit électronique comprend plusieurs mots lisibles qui sont envoyés au fichier de contrôle (13), et **en ce que** dans l'étape c), deux mots de vérification supplémentaires sont calculés à l'aide d'un algorithme dans le fichier de contrôle (13), dont un desdits mots est cherché dans le fichier de contrôle (13) afin de savoir s'il est autorisé, lesdits mots de vérification supplémentaires étant enregistrés en retour dans le circuit électronique de l'objet portatif (7) dans la partie lisible de la mémoire (27).

14. Unité de lecture périphérique (10) destinée à être en communication avec une station d'ordinateur (1) adaptée à la mise en oeuvre du procédé selon la revendications 1, l'unité comprenant des moyens d'émission et de réception de signaux (6) qui comprennent une antenne (6) afin de pouvoir communiquer avec un objet portatif (7) pourvu d'un circuit électronique (20) personnalisé ayant d'autres moyens d'émission et de réception de signaux lorsque celui-ci se trouve dans une zone déterminée, **caractérisée en ce qu'**elle comprend également un circuit imprimé (5) avec tous les composants électroniques de commande de l'antenne, dont un module mémoire (33) avec l'adresse d'un serveur déterminé et un logiciel de lancement de l'adresse, et **en ce qu'**elle est complètement intégrée dans un tapis de souris (3) ou dans un clavier d'ordinateur ou dans une boîte.

15. Unité de lecture périphérique (10) selon la revendication 14, **caractérisée en ce que** les composants électroniques disposés sur le circuit imprimé (5), qui est relié à l'antenne (6), comprennent un oscillateur (32), un modulateur d'amplitude (30) pour moduler les signaux en fonction des données à envoyer à un transpondeur (20) de l'objet, un élément de commande (31) recevant les signaux du modulateur (30) et de l'oscillateur (32), et un démodulateur (34) de signaux reçus du transpondeur.

16. Dispositif d'autorisation d'accès à des applications informatiques, , adapté à la mise en oeuvre du procédé selon la revendication 1, comprenant un objet portatif (7), qui est une montre-bracelet, pourvu d'un circuit électronique, qui est un transpondeur (20) personnalisé ayant des premiers moyens d'émission et de réception de signaux (28), et une unité de lecture (10) périphérique ayant des seconds moyens d'émission et de réception de signaux (6) pour communiquer avec l'objet portatif (7) lorsque celui-ci se trouve dans une zone déterminée, l'unité de lecture (10) étant en communication avec une station d'ordinateur (1), **caractérisé en ce que** l'unité de lecture (10) périphérique comprend une antenne (6) des seconds moyens d'émission et de réception, et un circuit imprimé (5) avec tous les composants électroniques de commande de l'antenne, dont un module mémoire (33) avec l'adresse d'un serveur déterminé et un logiciel de lancement de l'adresse, et **en ce que** l'unité de lecture est reliée par un câble électrique (2) ou une fibre optique à une prise d'entrée (4) correspondante d'une station d'ordinateur (1) pour l'alimentation électrique et le transfert de données et/ou de commandes entre l'unité et la station.

## Claims

1. Method for authorising access to computer applications using a computer installation which includes a computer station (1) connected to an inter-computer communication network (9), a peripheral read unit (10) in communication with the station (1), for its electric power supply and for the mutual transfer of data and/or commands, at least one portable object (7) provided with a personalised electronic circuit having first signal transmission and reception means (28) and a memory (27) including at least one readable verification word, the read unit (10) having second signal transmission and reception means (6) for communicating with the portable object (7) when the latter is located within a determined zone, **characterised in that** the method includes the steps of:
a) placing the portable object (7) within the determined zone so that the peripheral read unit (10), which includes an antenna (6) of second transmission and reception means and a printed circuit (5) with all electronic control components of the antenna, detects its presence and reads the readable word (12) of the circuit memory,
b) giving the instruction from the read unit, which includes a storage module (33) with the address of a determined server and an address initiation software, to the station (1) to connect itself automatically to the communication network (9) toward a checking file (13) of a determined server (8) for sending the readable word (12),
c) searching in the checking file (13) to see whether the readable word is included in a list of authorised words (14),
d) only if the readable word (12) has been found in the list (14), sending from the checking file (13) a password (15), addressed to a control logic module (25) of the electronic circuit of the portable object, which shapes the password to open a read and/or write barrier of storage means (26), which are contained in the memory of the electronic circuit of the portable object and which include access words to computer applications being kept secret by the read and/or write barrier, and
e) communicating the access words contained in the storage means to the station (1) in order to authorise said applications to be opened.

2. Method according to claim 1, **characterised in that** the addresses of the computer applications to be opened using access words are contained in the storage means (26).

3. Method according to claim 1, **characterised in that** the addresses of the computer applications to be opened using access words are provided to the computer station (1) by the server (8) on the communication network (9).

4. Method according to claim 1, **characterised in that** the link between the computer station (1) and the read unit (10) is assured by an electric cable (2) or an optical fibre, secured to the read unit (10) and able to be connected to a corresponding input socket (4) of the station (1) for the electric power supply of the read unit (10) and the transfer of data and/or commands between the unit (10) and the station (1).

5. Method according to any of the preceding claims, **characterised in that** the communication signals between the read unit (10) and the portable object (7) are magnetic or electromagnetic or optical or acoustic signals.

6. Method according to claim 5, **characterised in that** the electronic circuit with the first transmission and reception means is a transponder (20) having a coil (28) for receiving and transmitting radio-frequency signals for communicating with the read unit (10).

7. Method according to claim 6, **characterised in that** the electric power supply of the transponder (20) is provided using the radio-frequency signals received from the read unit (10).

8. Method according to claim 6, **characterised in that** the radio-frequency signals are amplitude modulated for the transmission of data and/or commands.

9. Method according to claim 1, **characterised in that** the portable object (7) is a watch or a bracelet or a necklace or a ring or a card or a badge.

10. Method according to any of claims 1, 3 and 4, **characterised in that** the read unit (10) is entirely integrated in a mouse pad or a keyboard of the computer station (1).

11. Method according to claim 4, **characterised in that** at least a portion of the read unit (10) is integrated in a peripheral case to the work station (1), the electric cable (2) or the optical fibre being secured to said case.

12. Method according to claim 11, **characterised in that** an antenna (6) of the second transmission and reception means of the read unit (10) is integrated in a mouse pad (3) or in a keyboard of the computer station (1) connected to the peripheral case.

13. Method according to claim 1, **characterised in that** the memory (27) of the electronic circuit includes several readable words which are sent to the checking file (13), and **in that** in step c), two additional verification words are calculated using an algorithm in the checking file (13) one of said words being searched in the checking file (13) in order to know whether it is authorised, said additional verification words being stored on their return in the electronic circuit of the portable object (7) in the readable portion of the memory (27).

14. Peripheral read unit (10) intended to be in communication with a computer station (1), adapted for implementing the method according to claim 1, the unit including signal transmission and reception means (6) which include an antenna (6) in order to be able to communicate with a portable object (7) provided with a personalised electronic circuit (20) having other signal transmission and reception means when the latter is located within a determined zone, **characterised in that** it further includes a printed circuit (5) with all electronic control components of the antenna, a storage module (33) of which with the address of a determined server and an address initiation software, and **in that** it is completely integrated in a mouse pad (3) or a computer keyboard, or a case.

15. Read unit (10) according to claim 14, **characterised in that** the electronic components arranged on the printed circuit (5), which is connected to the antenna (6), include an oscillator (32), an amplitude modulator (30) to modulate signals as a function of data to be sent to a transponder (20) of the object, a control element (31) receving the modulator (30) and oscillator (32) signals, and a demodulator (34) of signals received from the transponder.

16. Device for authorising access to computer applications, adapted for implementing the method according to claim 1, including a portable object (7), which is a wristwatch, provided with an electronic circuit, which is a personalised transponder (20) having first signal transmission and reception means (28), and a peripheral read unit (10) having second signal transmission and reception means (6) for communicating with the portable object (7) when the latter is located within a determined zone, the read unit (10) being in communication with a computer station (1), **characterised in that** the read unit (10) includes an antenna (6) of second transmission and reception means, and a printed circuit (5) with all electronic control components of the antenna, a storage module (33) of which with the address of a determined server and an address initiation software, and **in that** the read unit is connected by an electric cable (2) or an optical fibre to a corresponding input socket (4) of a computer station (1) for the electric power supply and transfer of data and/or commands between the unit and the station.

## Patentansprüche

1. Verfahren zum Erlauben des Zugriffs auf Datenverarbeitungsanwendungen mit Hilfe einer Datenverarbeitungsanlage, die eine Rechnerstation (1), die an ein Kommunikationsnetz (9) zwischen Rechner angeschlossen ist, eine Peripherie-Leseeinheit (10), die mit der Rechnerstation (1) für ihre elektrische Versorgung und für die gegenseitige Übertragung von Daten und/oder Befehlen verbunden ist, und wenigstens ein tragbares Objekt (7), das mit einer personalisierten elektronischen Schaltung versehen ist, die erste Mittel (28) zum Senden und Empfangen von Signalen sowie einen Speicher (27) besitzt, der wenigstens ein lesbares Verifikationswort enthält, umfasst, wobei die Leseeinheit (10) zweite Mittel (6) zum Senden und Empfangen von Signalen besitzt, um mit dem tragbaren Objekt (7) zu kommunizieren, wenn sich dieses in einer bestimmten Zone befindet, **dadurch gekennzeichnet, dass** das Verfahren die Schritte umfasst, die darin bestehen:
a) das tragbare Objekt (7) in der bestimmten Zone anzuordnen, damit die Peripherie-Leseeinheit (10), die eine Antenne (6) der zweiten Sende- und Empfangsmittel sowie eine gedruckte Schaltung (5) mit allen elektronischen Komponenten zum Steuern der Antenne umfasst, dessen Gegenwart erfasst und das lesbare Wort (12) des Speichers der Schaltung liest,
b) einen Befehl von der Leseeinheit, die ein Speichermodul (33) mit der Adresse eines bestimmten Servers sowie eine Software zum Starten der Adresse umfasst, an die Station (1) auszugeben, damit er sich in dem Kommunikationsnetz (9) automatisch zu einer Steuerdatei (13) des bestimmten Servers (8) ausbreitet, um das lesbare Wort (12) zu schicken,
c) in der Steuerdatei (13) zu suchen, ob das lesbare Wort in einer Liste zugelassener Wörter (14) enthalten ist,
d) ausschließlich dann, wenn das lesbare Wort (12) in der Liste (14) gefunden wurde, von der Steuerdatei (13) ein Passwort (15) zu einem Steuerungs-Logikmodul (25) der elektronischen Schaltung des tragbaren Objekts zu schicken, das das Passwort formt, um eine Lese- und/oder Schreibsperre der Speichermittel (26) zu öffnen, die in dem Speicher der elektronischen Schaltung des tragbaren Objekts enthalten sind und Wörter für den Zugriff auf Datenverarbeitungsanwendungen enthalten, die durch die Lese- und/oder Schreibsperre geheim gehalten werden, und
e) die in den Speichermitteln enthaltenen Zugriffswörter an die Station (1) zu übermitteln, um das Öffnen dieser Anwendungen zuzulassen.

2. Verfahren nach Anspruch 1, **dadurch gekennzeichnet, dass** die Adressen der Datenverarbeitungsanwendungen, die mit Hilfe der Zugangswörter geöffnet werden sollen, in den Speichermitteln (26) enthalten sind.

3. Verfahren nach Anspruch 1, **dadurch gekennzeichnet, dass** die Adressen der Datenverarbeitungsanwendungen, die mit Hilfe der Zugriffswörter geöffnet werden sollen, durch den Server (8) über das Kommunikationsnetz (9) zur Rechnerstation (1) geliefert werden.

4. Verfahren nach Anspruch 1, **dadurch gekennzeichnet, dass** die Verbindung zwischen der Rechnerstation (1) und der Leseeinheit (10) durch ein elektrisches Kabel (2) oder eine Lichtleitfaser gewährleistet ist, die mit der Leseeinheit (10) fest verbunden und mit einer entsprechenden Eingangssteckdose (4) der Station (1) für die elektrische Versorgung der Leseeinheit (10) und die Übertragung von Daten und/oder von Befehlen zwischen der Einheit (10) und der Station (1) verbunden werden können.

5. Verfahren nach einem der vorhergehenden Ansprüche, **dadurch gekennzeichnet, dass** die Kommunikationssignale zwischen der Leseeinheit (10) und dem tragbaren Objekt (7) magnetische oder elektromagnetische oder optische oder akustische Signale sind.

6. Verfahren nach Anspruch 5, **dadurch gekennzeichnet, dass** die elektronische Schaltung mit den ersten Sende- und Empfangsmitteln ein Transponder (20) mit einer Spule (28) zum Empfangen und Senden von Hochfrequenzsignalen ist, um mit der Leseeinheit (10) zu kommunizieren.

7. Verfahren nach Anspruch 6, **dadurch gekennzeichnet, dass** die elektrische Versorgung des Transponders (20) mit Hilfe von Hochfrequenzsignalen erfolgt, die von der Leseeinheit (10) empfangen werden.

8. Verfahren nach Anspruch 6, **dadurch gekennzeichnet, dass** die Hochfrequenzsignale amplitudenmoduliert werden, um Daten und/oder Befehle zu übertragen.

9. Verfahren nach Anspruch 1, **dadurch gekennzeichnet, dass** das tragbare Objekt (7) eine Uhr, ein Armband, ein Halsband, ein Ring, eine Karte oder eine Ansteckmarke ist.

10. Verfahren nach einem der Ansprüche 1, 3 und 4, **dadurch gekennzeichnet, dass** die Leseeinheit (10) vollständig in ein Mousepad (3) oder in eine Tastatur der Rechnerstation (1) integriert ist.

11. Verfahren nach Anspruch 4, **dadurch gekennzeichnet, dass** wenigstens ein Teil der Leseeinheit (10) in ein Peripheriegehäuse bei der Arbeitsstation (1) integriert ist, wobei das Elektrokabel (2) oder die Lichtleitfaser mit dem Gehäuse fest verbunden ist.

12. Verfahren nach Anspruch 11, **dadurch gekennzeichnet, dass** eine Antenne (6) der zweiten Sende- und Empfangsmittel der Leseeinheit (10) in ein Mousepad (3) oder in eine Tastatur der Rechnerstation (1), die mit dem Peripheriegehäuse verbunden ist, integriert ist.

13. Verfahren nach Anspruch 1, **dadurch gekennzeichnet, dass** der Speicher (27) der elektronischen Schaltung mehrere lesbare Wörter enthält, die an die Steuerdatei (13) geschickt werden, und dass im Schritt c) zwei zusätzliche Verifikationswörter mit Hilfe eines Algorithmus in der Steuerdatei (13) berechnet werden, wovon eines in der Steuerdatei (13) gesucht wird, um zu wissen, ob es zugelassen ist, wobei die zusätzlichen Verifikationswörter umgekehrt in der elektronischen Schaltung des tragbare Objekts (7) im lesbaren Teil des Speichers (27) gespeichert sind.

14. Peripherie-Leseeinheit (10), die dazu bestimmt ist, mit einer Rechnerstation (1) zu kommunizieren, die so beschaffen ist, dass sie ein Verfahren nach Anspruch 1 ausführt, wobei die Einheit Mittel (6) zum Senden und Empfangen von Signalen umfasst, die eine Antenne (6), um mit einem tragbaren Objekt (7), das mit einer personalisierten elektronischen Schaltung (20) mit weiteren Mitteln zum Senden und Empfangen von Signalen versehen ist, kommunizieren zu können, wenn sich dieses in einer bestimmten Zone befindet, umfassen, **dadurch gekennzeichnet, dass** sie außerdem eine gedruckte Schaltung (5) mit allen elektronischen Komponenten zum Steuern der Antenne umfasst, wovon eine ein Speichermodul (33) mit der Adresse eines bestimmten Servers und eine Software zum Starten der Adresse ist, und dass sie vollständig in ein Mousepad (3) oder in eine Tastatur eines Rechners oder in ein Gehäuse integriert ist.

15. Peripherie-Leseeinheit (10) nach Anspruch 14, **dadurch gekennzeichnet, dass** die elektronischen Komponenten, die auf der gedruckten Schaltung (5) angeordnet sind, die mit der Antenne (6) verbunden ist, einen Oszillator (32), einen Amplitudenmodulator (30) zum Modulieren der Signale in Abhängigkeit von den zu einem Transponder (20) des Objekts zu schickenden Daten, ein Steuerelement (31), das die Signale von dem Modulator (30) und dem Oszillator (32) empfängt, und einen Demodulator (34) für die vom Transponder empfangenen Signale umfassen.

16. Vorrichtung zum Erlauben des Zugriffs auf Datenverarbeitungsanwendungen, die so beschaffen ist, dass sie das Verfahren nach Anspruch 1 ausführt, mit einem tragbaren Objekt (7), das eine Armbanduhr ist, die mit einer elektronischen Schaltung versehen ist, die ein personalisierter Transponder (20) ist, der erste Mittel (28) zum Senden und Empfangen von Signalen besitzt, und einer Peripherie-Leseeinheit (10), die zweite Mittel (6) zum Senden und Empfangen von Signalen besitzt, um mit dem tragbaren Objekt (7) zu kommunizieren, wenn sich dieses in einer bestimmten Zone befindet, wobei die Leseeinheit (10) mit einer Rechnerstation (1) kommuniziert, **dadurch gekennzeichnet, dass** die Peripherie-Leseeinheit (10) eine Antenne (6) der zweiten Sende- und Empfangsmittel sowie eine gedruckte Schaltung (5) mit allen elektronischen Komponenten zum Steuern der Antenne umfasst, wovon eine ein Speichermodul (33) mit der Adresse eines bestimmten Servers und eine Software zum Starten der Adresse ist, und dass die Leseeinheit über ein elektrisches Kabel (2) oder eine Lichtleitfaser mit einer entsprechenden Eingangssteckdose (4) einer Rechnerstation (1) für die elektrische Versorgung und die Übertragung von Daten und/oder Befehlen zwischen der Einheit und der Station verbunden ist.
